# DEMANDE DE BREVET EUROPEEN

(11) **EP 1 104 648 A1**
(43) Date de publication de la demande: **06.06.2001**
(21) Numéro de dépôt: 99123772.8
(22) Date de dépôt: 30.11.1999
(51) Int. Cl.: A01G 25/02, B29C 69/00

(54) **Tuyau d'irrigation goutte-à-goutte et procédé de fabrication d'un tel tuyau**

(71) Demandeur: Swisscab S.A., 1462 Yvonand (CH)
(72) Inventeur: Buluschek, Bruno, 1026 Echandens (CH)
(74) Mandataire: Ravenel, Thierry Gérard Louis

(57) **Abrégé**

Ce tuyau d'irrigation goutte-à-goutte (1) comprend un tube (2) destiné à être connecté à une source d'eau sous pression. Le tube est pourvu de deux lèvres latérales (3a, 3b) qui sont superposées l'une à l'autre et sont venues de formage avec ce tube. Le tuyau (1) comprend également, de distance en distance, des cavités d'écoulement d'eau en goutte-à-goutte (11) mettant en communication l'intérieur dudit tube (2) avec l'extérieur.

Selon l'invention, une bande (4) est fixée de façon étanche entre les lèvres (3a, 3b), et les cavités (11) sont ménagées dans ladite bande (4) en les découpant par estampage, les cavités traversant ladite bande d'une grande face à l'autre.

## Description

La présente invention concerne le domaine de l'irrigation goutte-à-goutte et plus particulièrement un tuyau d'irrigation goutte-à-goutte, un produit intermédiaire permettant d'obtenir un tel tuyau, et un procédé de fabrication du tuyau et du produit intermédiaire.

On connaît du brevet US 5,106,021 un tuyau d'irrigation goutte-à-goutte réalisé à partir d'une feuille allongée de matière plastique repliée longitudinalement. Les deux parties repliées sont réunies par leurs bords pour former deux lèvres longitudinales qui s'étendent de manière adjacente au tube dont elles viennent de formage. Lorsque ce tube est branché sur une source d'eau sous pression, il se gonfle et présente alors une forme cylindrique de section circulaire par exemple d'où font saillie les deux lèvres latérales.

L'une ou les deux lèvres de ce tuyau sont munies d'empreintes qui forment des cavités d'écoulement d'eau. Ces cavités présentent la forme de labyrinthes qui, par des chambres d'entrée et de décharge d'eau, communiquent respectivement avec l'intérieur du tuyau et avec l'extérieur. Ces empreintes sont obtenues typiquement par repoussage ou impression direct de la matière plastique à l'aide par exemple d'un rouleau comprenant sur sa périphérie des formes en relief.

Un tel tuyau présente des qualités d'écoulement acceptables si l'eau par laquelle il est alimenté présente une propreté irréprochable par exemple si elle fait l'objet d'un filtrage soigneux, ce qui est rarement le cas de l'eau utilisée pour l'irrigation. La forme des labyrinthes, dont les contours ne sont qu'approximativement définissables du fait même du procédé par lequel ils sont obtenus, ne permet pas un écoulement d'eau suffisamment turbulent ce qui conduit à un encrassement rapide des labyrinthes et donc à plus ou moins court terme à leur obturation.

Un autre inconvénient de ce type de tuyau réside dans le fait que, la réalisation des labyrinthes par repoussage ou impression ne permet pas d'assurer une forme précise et régulière sur toute la longueur de ces derniers et de leurs chambres d'entrée et de décharge ce qui nuit à l'uniformité de l'irrigation.

L'invention a pour but principal de remédier aux inconvénients de l'art antérieur en fournissant un tuyau d'irrigation qui puisse être utilisé avec des eaux non parfaitement filtrées sans risque d'obturation et qui par ailleurs puisse être fabriqué de façon simple et économique.

A cet effet l'invention a donc pour objet un tuyau d'irrigation goutte-à-goutte comprenant un tube destiné à être connecté à une source d'eau sous pression et pourvu de deux lèvres latérales qui sont superposées l'une à l'autre et sont venues de formage avec ce tube, le tuyau étant pourvu de distance en distance de cavités d'écoulement d'eau mettant en communication l'intérieur dudit tube avec l'extérieur, caractérisé en ce qu'une bande est fixée de façon étanche entre lesdites lèvres, et en ce que lesdites cavités sont ménagées dans ladite bande en les découpant par étampage, les cavités traversant ladite bande d'une grande face à l'autre.

Grâce à ces caractéristiques, il est possible d'obtenir des cavités ou labyrinthes d'écoulement présentant des géométries très précisément définies permettant notamment de créer dans l'eau qui les traverse des turbulences provoquant un auto-nettoyage des cavités et une limitation du débit d'écoulement. En outre, il devient commode de conférer à chaque cavité une longueur importante ce qui contribue également à améliorer les propriétés d'auto-nettoyage. Enfin, la forme des cavités est parfaitement reproductible de sorte que l'on obtient une irrigation régulière sur toute la longueur du tuyau.

D'autres caractéristiques intéressantes du tuyau sont définies dans les revendications dépendantes 2 à 5.

L'invention a également pour objet un produit intermédiaire destiné à l'obtention de tuyaux d'irrigation selon l'invention, ledit produit intermédiaire étant caractérisé en ce qu'il comprend un bi-corps allongé présentant une symétrie par rapport à un plan longitudinal et formé de deux tubes juxtaposés réunis par des rubans superposées qui en sont venus de formage, et une bande fixée de façon étanche entre les rubans et en ce que ladite bande est pourvue de cavités d'écoulement, disposées de distance en distance de part et d'autre dudit plan de symétrie.

Ce produit intermédiaire présente l'avantage de faciliter considérablement la fabrication des tuyaux d'irrigation et d'en réduire le coût du fait des possibilités de fabrication de deux tuyaux simultanément.

D'autres caractéristiques intéressantes de ce produit intermédiaire apparaissent dans les revendications dépendantes 7 à 9.

L'invention a également pour objet un procédé de fabrication caractérisé en ce qu'il consiste à fabriquer un produit intermédiaire comprenant un bi-corps allongé présentant une symétrie par rapport à un plan longitudinal et formé de deux tubes juxtaposés réunis par des rubans superposées qui en sont venus de formage, et une bande fixée de façon étanche entre les rubans et en ce que ladite bande est pourvues de cavités d'écoulement, disposées de distance en distance de part et d'autre dudit plan de symétrie et à sectionner ledit produit intermédiaire selon ledit plan de symétrie.

Ce procédé conduit à une fabrication en continu des tuyaux sans nécessiter l'utilisation de goutteurs discrets bien connu de l'art antérieur tels que ceux décrits dans le brevet US 5,163,622, goutteurs qui nécessitent une gestion de fabrication, de manipulation, de guidage, d'orientation et de transport jusqu'à l'intérieur du tuyau.

D'autres caractéristiques avantageuses de ce procédé sont définies dans les revendications dépendantes 11 à 13.

D'autres caractéristiques et avantages de la présente invention apparaîtront au cours de la description qui va suivre, donnée uniquement à titre d'exemple et faite en se référant aux dessins annexés sur lesquels:
- la figure 1 est une vue en perspective d'un tronçon de tuyau d'irrigation goutte-à-goutte selon l'invention;
- la figure 2 représente une vue en coupe transversale d'un produit intermédiaire à partir duquel on peut obtenir deux tuyaux d'irrigation goutte-à-goutte selon l'invention;
- la figure 3 est une vue en coupe longitudinale de ce produit intermédiaire, prise selon la ligne III-III de la figure 2;
- la figure 4 montre une vue partielle d'une variante de réalisation d'un tuyau d'irrigation selon l'invention;

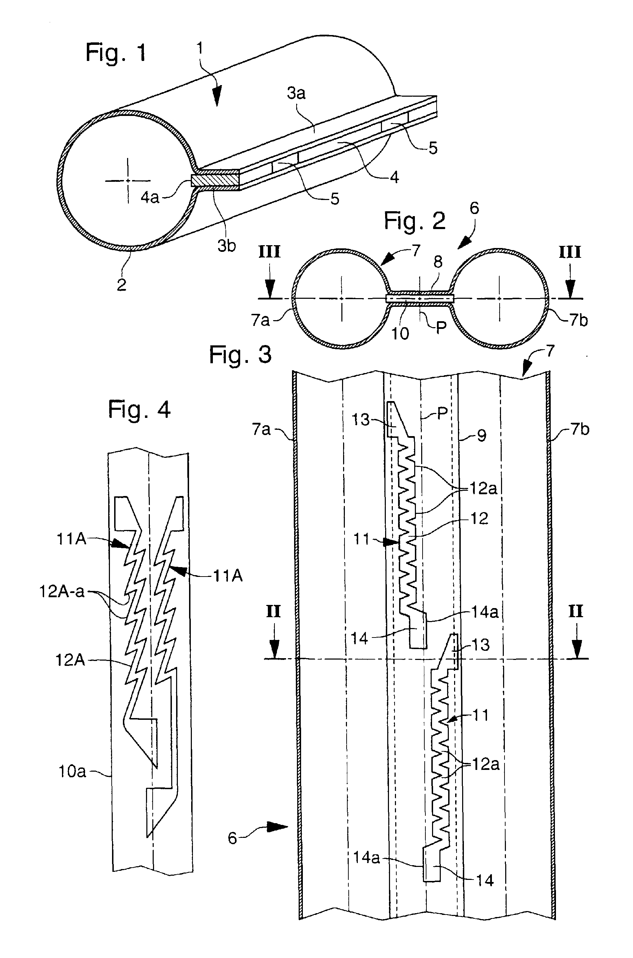

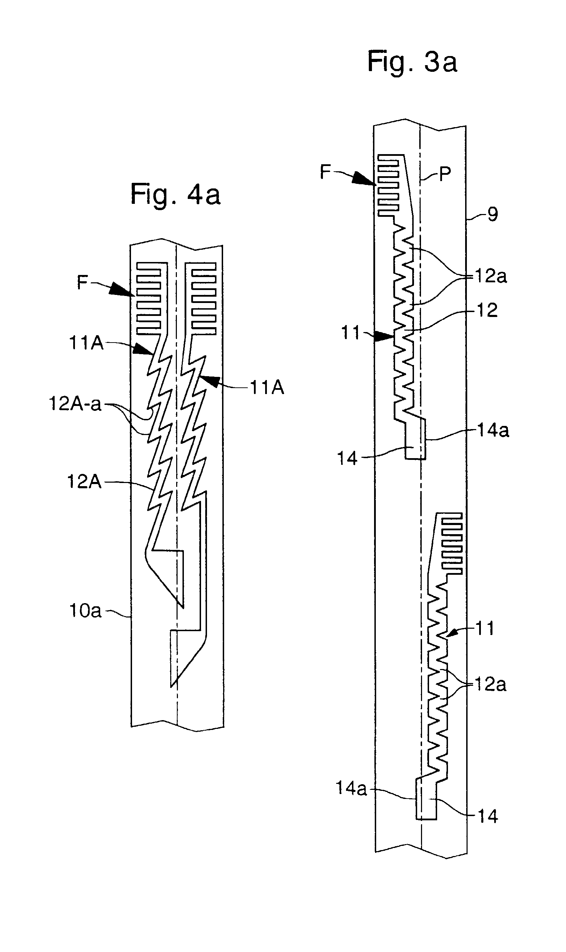

- les figures 3a et 4a sont des vues analogues aux figures 3 et 4 illustrant une variante de réalisation de la cavité d'écoulement du tuyau selon l'invention;

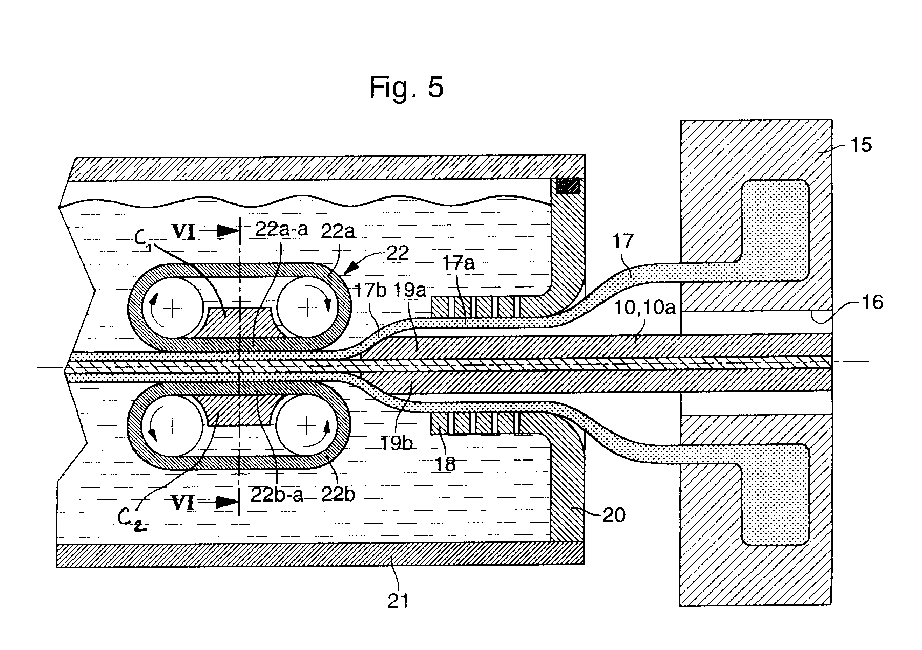

- la figure 5 représente une vue en coupe verticale axiale d'une partie d'une ligne de fabrication de tuyaux d'irrigation selon l'invention, la vue montrant notamment une filière, un calibreur et un bac à vide;

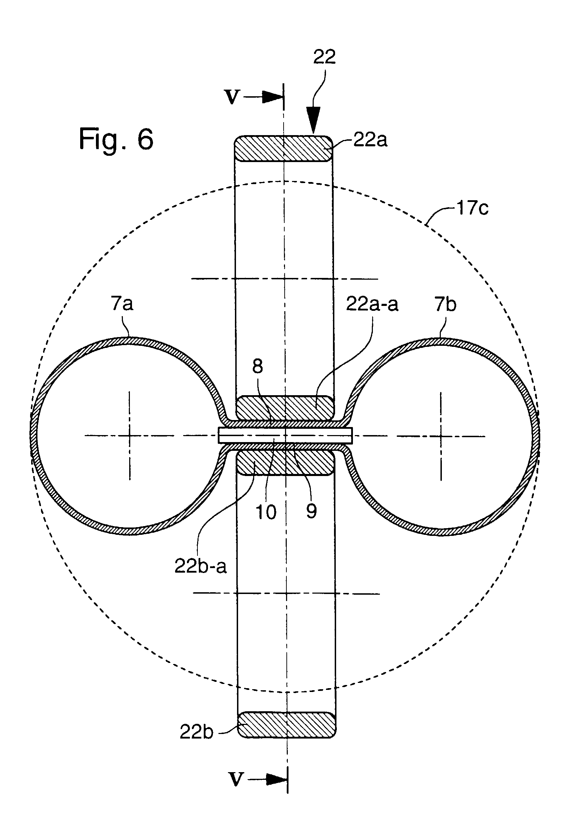

- la figure 6 est une vue en coupe transversale prise selon la ligne VI-VI de la figure 5;

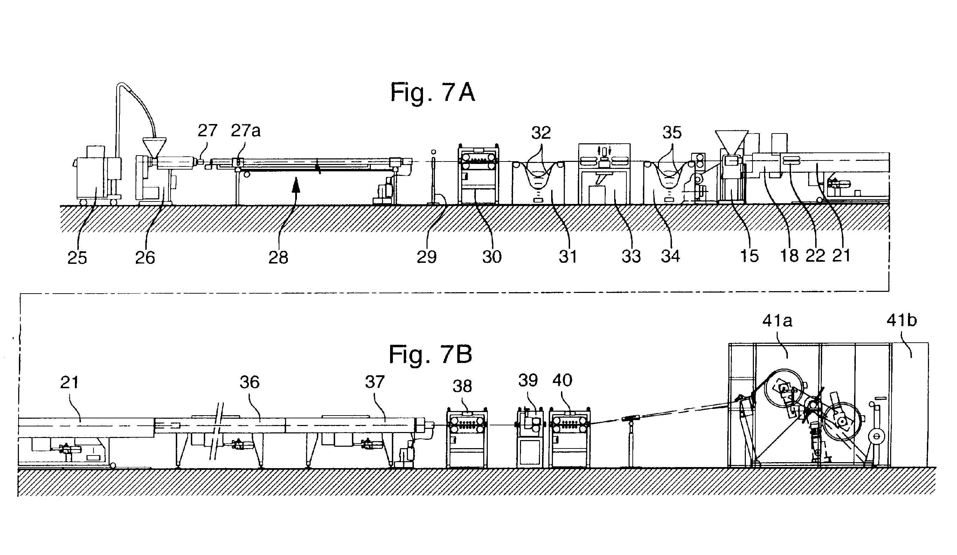

- les figures 7A et 7B représentent ensemble une vue en élévation latérale, très schématique, d'une ligne de fabrication de tuyaux d'irrigation selon l'invention;

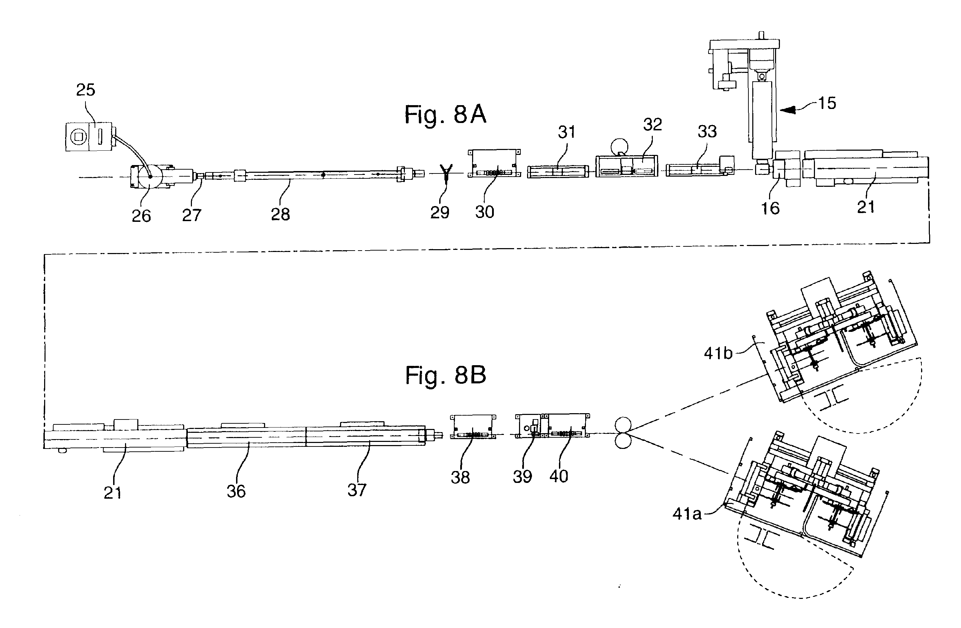

- les figures 8A et 8B représentent ensemble une vue en plan de cette ligne de fabrication.

On va tout d'abord se référer à la figure 1 qui représente le mode de réalisation préféré du tuyau d'irrigation goutte-à-goutte selon l'invention, désigné par la référence générique 1.

Ce tuyau d'irrigation 1 comprend un tube cylindrique 2 de section circulaire de préférence, muni latéralement de deux lèvres longitudinales superposées 3a et 3b. Ces lèvres sont formées respectivement par des parties marginales d'une bande allongée repliée sur elle même pour former le tuyau 1. Ces lèvres sont donc venues de formage avec le tube 2 à partir d'une matière plastique appropriée connue dans la technologie des tuyaux d'irrigation de ce type. Il est à noter qu'en fonction de l'épaisseur de la paroi du tube 2, celui-ci ne peut assurer sa forme cylindrique circulaire que lorsque de l'eau sous pression circule à l'intérieur du tube 2.

Selon l'invention, une bande 4 en matière plastique qui court sur toute la longueur du tuyau 1 est disposée entre les lèvres 3a et 3b. La largeur de cette bande est de préférence légèrement supérieure à celle des lèvres 3a et 3b, étant entendu qu'elle est à fleur des rives des lèvres côté extérieur, alors qu'à l'intérieur du tube 2 elle dépasse légèrement de la surface interne de celui-ci par un petit rebord 4a.

Sur la figure 1, on aperçoit également deux ouvertures latérales 5 par lesquelles l'eau s'écoule en goutte-à-goutte vers l'extérieur, lorsque de l'eau sous pression circule dans le tube 2. Le tuyau 1 comprend une pluralité de ces ouvertures 5 réparties régulièrement selon sa longueur.

On va maintenant se référer aux figures 2 et 3 pour examiner un produit intermédiaire, désigné par la référence générale 6, permettant d'obtenir un tuyau d'irrigation goutte-à-goutte tel que celui représenté sur la figure 1.

Ce produit intermédiaire 6 comprend un bi-corps 7 formé de deux tubes parallèles cylindriques 7a et 7b, réunis entre eux par deux rubans de jonction 8 et 9 disposés en superposition et venus de formage avec les tubes 7a et 7b.

Une bande 10 réalisée en une matière plastique telle que le polyéthylène, est disposée entre les rubans 8 et 9 dont elle dépasse légèrement de part et d'autre en faisant saillie respectivement dans les espaces internes des tubes 7a et 7b par des petits rebords 10a. Ainsi, l'ensemble du bi-corps 7 présente un plan de symétrie longitudinal que l'on désignera par la référence P.

Comme on le voit plus particulièrement sur la figure 3 et selon une autre caractéristique de l'invention, la bande 10 est pourvue d'une pluralité de cavités 11 réparties régulièrement sur toute sa longueur, ces cavités permettant de limiter le débit d'eau. Ces cavités 11 sont réalisées dans la bande 10 par étampage à l'aide d'un outil approprié. Les cavités s'étendent donc sur toute l'épaisseur de la bande 10. Lorsque la bande n'est pas disposée entre les rubans 8 et 8, les cavités 11 la traversent à claire-voie d'une grande face de la bande à l'autre.

Chaque cavité 11 d'écoulement présente la forme d'un labyrinthe allongé 12 comprenant une pluralité de méandres 12a composés de V juxtaposés. Les cavités 11 communiquent par une première extrémité avec une chambre d'entrée d'eau 13 qui débouche dans le tube respectif 7a ou 7b et par une autre extrémité dans une chambre de décharge d'eau 14 qui est encore bouchée dans le produit intermédiaire 6.

Dans le mode de réalisation représenté du produit intermédiaire, les cavités 11 sont alternativement disposées d'un côté et de l'autre du plan de symétrie P et elles sont longitudinalement espacées les unes des autres. Par ailleurs, on peut constater sur la figure 3 que les chambres de décharge 14 de chaque cavité d'écoulement 11 dépassent légèrement le plan P en direction du bord opposé de la bande 10 pour former un volume sécable 14a, c'est-à-dire qui peut être divisé.

On notera toutefois que cette disposition des cavités d'écoulement 11 n'est pas la seule possible dans le cadre de l'invention. Ainsi, la figure 4 montre un autre exemple dans lequel on utilise une bande 10A présentant des cavités d'écoulement d'eau 11A qui sont bien situées de part et d'autre du plan de symétrie P, mais disposées respectivement en regard les unes des autres, c'est-à-dire en coïncidence latéral de part et d'autre dudit plan de symétrie P. On notera aussi que dans ce cas les méandres 12A des labyrinthes 12A se présentent sous la forme de zigzag avec des angles aigus au niveau des liaisons entre les portions de chaque méandre.

On comprend désormais que le produit intermédiaire 6 des figures 2 et 3, ou celui réalisé en variante selon la figure 4, permet d'obtenir deux tuyaux tels que le tuyau 1 de la figure 1 en sectionnant le produit 6 selon le plan de symétrie longitudinale P, moyennant quoi les volumes 14a sont séparés des cavités d'écoulement d'eau 11 ou 11A de telle sorte que les chambres de décharge 14 débouchent vers l'extérieur de chaque tuyau ainsi obtenu, par une ouverture telle que l'ouverture 5 de la figure 1.

Cependant, l'invention n'est pas limitée à la fabrication des tuyaux d'irrigation conforme à la figure 1 en passant par le produit intermédiaire 6 selon les figures 2 à 4, bien qu'une telle méthode présente des avantages considérables, comme on le constatera par la suite lors de la description du procédé de fabrication du produit intermédiaire. En effet, il serait possible de fabriquer le tuyau 1 en repliant une feuille allongée de matière plastique pour former le tube 2 et les lèvres 3a et 3b et en fixant de façon étanche entre ces lèvres 3a et 3b une bande 4 par exemple par thermosoudage, la bande 4 ayant alors la forme de la moitié longitudinale de la bande 10 ou 10A telle que représentée sur les figures 2 à 4 respectivement. Bien entendu, dans ce cas, la bande 4 sera pourvue selon l'invention, de cavités d'écoulement limitant le débit d'eau et débouchant sur ses grandes faces en y étant ménagées en les découpant par étampage.

En se référant aux figures 3a et 4a on voit des vues analogues aux figures 3 et 4 mais qui illustrent d'une variante de réalisation de la cavité d'écoulement 11 du tuyau selon l'invention. Ces cavités d'écoulement 11 se distinguent de celles décrites notamment en liaison avec les figures 3 et 4 en ce que la chambre d'entrée d'eau 13 est définie par une découpe particulière à la façon d'un peigne. Cette découpe permet une fois que la bande est intercalée entre les rubans 8 et 9 de former pour chaque chambre 13 une pluralité d'orifices d'entrée. Le nombre la taille et de ces orifices sont respectivement définis par le nombre et les espaces entre les dents du peigne. On comprend donc que cette forme particulière de la découpe de la cavité d'écoulement peut former simplement et à faible coût des moyens de filtrage F pour le liquide qui entre dans les cavités d'écoulement 11. Cet arrangement réduit encore davantage les risques d'encrassement de ces cavités. A titre indicatif, la largeur des orifices est de l'ordre de 0,5 mm et la hauteur dépend de l'épaisseur de la bande.

On va maintenant se référer aux figures 5 et 6 qui illustrent plusieurs étapes du procédé de fabrication du produit intermédiaire 6 que l'on vient de décrire. Le sens de progression du produit intermédiaire 6 en formation est ici de droite à gauche.

Sur la figure 5, on a représenté une tête d'extrusion 15 pourvue d'une ouverture centrale 16. Cette tête d'extrusion 15 peut être de tout type connu. Elle permet d'extruder en continu un manchon d'ébauche 17 qui est amené dans l'ouverture d'un calibreur 18 où est formé un tronçon tubulaire 17a du manchon 17 dont le diamètre est ramené à une valeur calibrée. Ce tronçon 17a est représenté en pointillés sur la figure 6.

La tête d'extrusion 15 et le calibreur 18 sont traversés par deux guides 19a et 19b formés par des plats allongés espacés verticalement l'un de l'autre d'une distance égale à celle d'une bande 10 ou 10A (figures 2 à 4). Une telle bande 10 ou 10A pourvue de ses cavités d'écoulement d'eau, 11 ou 11A est amenée en continu entre les guides 19a et 19b.

Le calibreur 18 est placé dans la paroi amont 20 d'un bac de refroidissement 21 fermé et maintenu sous vide. Le bac 21 est rempli d'un liquide de refroidissement tel que de l'eau. Les guides 19a et 19b dépassent légèrement l'extrémité aval du calibreur 18.

Encore davantage en aval, le bac de refroidissement 21 contient des moyens de pincement et de soudage 22 dont on aperçoit une coupe transversale sur la figure 6. Ces moyens de pincement et de soudage 22 sont placés sur le trajet de progression du produit 6 en formation à un emplacement où se trouve un tronçon 17b du manchon 17 dont la température est encore suffisante pour permettre une solidarisation à chaud du manchon 17 et de la bande 10 ou 10A.

Les moyens de pincement et de soudage 22 proprement dit comprennent deux courroies sans fin 22a, 22b ayant une largeur légèrement inférieure à celle de la bande 10. Elles sont disposées respectivement au-dessus et en dessous du trajet de progression du produit 6 en formation, leurs brins adjacents 22a-a et 22b-a étant écartés l'un de l'autre d'une distance qui est légèrement inférieure à la somme de l'épaisseur de la bande 10 et de deux fois l'épaisseur du manchon dans son tronçon calibré 17b. La paroi du bac de refroidissement 21 présente deux consoles ou sabots fixes C1, C2 qui s'étendent horizontalement vers l'intérieur entre respectivement les brins supérieurs et inférieurs des courroies sans fin 22a et 2b étant entendu que le brin inférieur de la courroie 22a est en contact aved la face inférieure de la console C1 et que le brin supérieur de la courroie 22b est en contact avec la face supérieure de la console C2.

L'effet des moyens de pincement et de soudage 22 sur le manchon 17 apparaît clairement sur la figure 6. La zone diamétrale verticale du manchon 17a va être pincée et se réduire très rapidement dans le domaine de transition entre l'extrémité aval des guides 19a et 19b et les brins adjacents 22a-a et 22b-a des moyens 22, cette opération donnant naissance aux rubans 8 et 9 représentés sur les figures 2 et 3, tandis que la partie restante du manchon 17a va prendre la forme des deux tubes 7a et 7b du bi-corps 7. Simultanément, le manchon 17b étant encore suffisamment chaud, la bande 10 va être soudée aux rubans 8 et 9.

A la sortie des moyens 22, on obtient donc le produit intermédiaire 6 des figures 2 et 3.

On va maintenant brièvement décrire l'ensemble des opérations du procédé de fabrication selon l'invention en se reportant plus particulièrement aux figures 7A, 7B et 8A, 8B. Le sens de progression du procédé est de gauche à droite sur ces figures.

Dans un poste 25, on prépare la matière plastique pour réaliser une bande ayant les dimensions d'une bande 10 ou 10A. Cette matière est versée dans une extrudeuse 26 comprenant une filière 27. La bande extrudée 10 passe dans un calibreur 27A puis dans un poste de refroidissement 28 pour être amenée dans un poste 29 de contrôle de dimensions, puis dans un poste de tirage 30. La production de la bande est parfaitement classique et ne nécessite aucune explication supplémentaire.

En aval du poste de tirage 30 est disposé un poste d'accumulation 31 dans lequel la bande peut former un creux 32 de profondeur variable. Ce poste d'accumulation 31 est suivi d'un poste d'étampage 33 chargé de réaliser dans la bande les cavités d'écoulement d'eau 11 ou 11A pour constituer une bande telle que 10 ou 10A.

Ce poste d'étampage 33 comprend de préférence une matrice fixe et un poinçon mobile dont les formes sont adaptées aux empreintes à pratiquer dans la bande 10 ou 10A. On notera qu'un tel poste d'étampage est connu en soi. Au cours de l'opération d'étampage la bande est arrêtée puis accélérer jusqu'à ce que une partie suivante de la bande à étampée soit présentée au poste d'étampage et ainsi de suite.

En aval du poste d'étampage 33, la ligne de fabrication comprend un second poste d'accumulation 34 dans lequel la bande, désormais munies de ses cavités d'écoulement d'eau 11 ou 11A, est amenée à former un creux 35 de profondeur variable.

Les postes d'accumulation 31 et 34 sont pourvus de moyens de mesure permettant de déterminer la profondeur des creux qui y sont formées. Les données de mesure ainsi recueillies sont appliquées au poste de tirage 30 pour que ce dernier ajuste en conséquence la vitesse de la bande qui alimente le poste d'étampage 33. Cet ensemble compense ainsi le fonctionnement discontinu de ce dernier, le processus de fabrication se déroulant par ailleurs en continu.

Selon une variante du procédé, il est possible de remplacer le poste de découpage par étampage 33 à matrice fixe et poinçon mobile à fonctionnement inhérent discontinu, par un poste de découpage par étampage (non représenté) comprenant un rouleau agissant en coopération avec une enclume, le rouleau présentant en relief la forme des cavités d'écoulement d'eau. Un tel poste présente l'avantage d'un fonctionnement continu, ce qui rend alors inutile les postes d'accumulation 31 et 34. Toutefois, un poste de découpage par étampage à fonctionnement discontinu est actuellement préféré, car il permet d'obtenir des découpes extrêmement précises et bien définies des cavités d'écoulement d'eau, ce qui confère de meilleures propriétés de turbulence et de régularité d'irrigation aux tuyaux d'irrigation obtenus.

Le poste d'accumulation 35 est suivi de la tête d'extrusion 15, du calibreur 18 et du bac à vide 21, contenant les moyens 22 déjà décrits à propos des figures 5 et 6.

Le produit intermédiaire 6 obtenu à la sortie du bac de refroidissement 21 passe ensuite dans des refroidisseurs 36 et 37, puis dans un poste de tirage 38 chargé d'amener la bande à la vitesse nécessaire.

Ce poste de tirage 38 est suivi d'un poste de sectionnement 39 dans lequel un couteau fixe, ou de préférence rotatif, permet de découper longitudinalement le produit intermédiaire 6 selon le plan de symétrie P (figures 2 et 3).

Puis, les deux tuyaux 1 obtenus sont amenés dans un poste de tirage 40, séparés l'un de l'autre et enroulés respectivement dans des bobinoirs 41a et 41b.

Le procédé que l'on vient de décrire peut être exécuté en continu à une vitesse constante de 60 m/min. par exemple, cette valeur n'étant évidemment qu'indicative.

Le tuyau d'irrigation et son procédé de fabrication selon l'invention présente les avantages suivants.
- Le labyrinthe 12 ou 12A peut être d'une longueur importante seulement limitée la distance entre les ouvertures de sortie 5 (figure 1). Les risques d'obturations des cavités 11 ou 11A par des salissures contenues dans l'eau sont ainsi réduits car les sections d'écoulement peuvent être importantes si le labyrinthe est long.
- L'opération de découpage par étampage permet d'obtenir des arêtes très vives dans les labyrinthes. De la sorte, l'écoulement de l'eau y devient turbulent ce qui réduit encore davantage le débit pour une section donnée.
- La distance entre les cavités d'écoulement d'eau peut facilement être réglée par une commande judicieuse du rythme de travail du poste de découpage par étampage 33.
- Les ouvertures 5 sont obtenues pendant le sectionnement du produit intermédiaire 6, ce qui évite toute opération de percement à effectuer après la fabrication.
- Dans la mesure où la fabrication passe par le produit intermédiaire, la ligne de fabrication permet de doubler la quantité de tuyaux fabriqués par unité de temps, ce qui réduit considérablement le prix de revient des tuyaux.
- La bande 10 ou 10A étant fabriquée en continu sur la ligne de fabrication simultanément à la fabrication des tubes 7a et 7b, il n'est nécessaire ni de stocker des goutteurs indépendants, ni de positionner ceux-ci à l'aide d'un bol vibreur (voir pour une description de l'art antérieur de goutteurs individuels la demande de brevet européen déposée au nom de la demanderesse sous le numéro 98 112645.1 le 8 juillet 1998).
- Les dimensions du tube 1 peuvent être faibles. Pour fixer les idées, son diamètre peut se situer entre 12 et 25 mm et l'épaisseur de sa paroi peut être située entre 0,15 et 1, 2 mm.

## Revendications

1. Tuyau d'irrigation goutte-à-goutte (1) comprenant un tube (2) destiné à être connecté à une source d'eau sous pression et pourvu de deux lèvres latérales (3a, 3b) qui sont superposées l'une à l'autre et sont venues de formage avec ce tube, le tuyau (1) étant pourvu de distance en distance de cavités d'écoulement d'eau (11, 11A) mettant en communication l'intérieur dudit tube (2) avec l'extérieur, caractérisé en ce qu'une bande (4) est fixée de façon étanche entre lesdites lèvres (3a, 3b), et en ce que lesdites cavités (11, 11A) sont ménagées dans ladite bande (4) en les découpant par étampage, les cavités traversant ladite bande d'une grande face à l'autre.

2. Tuyau (1) suivant la revendication 1, caractérisé en ce que chaque cavité d'écoulement d'eau (11, 11A) comprend un labyrinthe (12, 12A) de forme générale allongée disposée longitudinalement dans ladite bande (4) et communiquant à une extrémité avec une chambre d'entrée (13) débouchant dans ledit tube (1) et à une autre extrémité avec une chambre de décharge (14) débouchant à l'extérieur.

3. Tuyau (1) suivant la revendication 2, caractérisé en ce que chaque labyrinthe (12) présente pluralité de méandres juxtaposés en forme de V (12a).

4. Tuyau (1) suivant la revendication 2, caractérisé en ce que chaque labyrinthe (12A) présente un pluralité de méandres juxtaposés en zigzag (12A-a).

5. Tuyau (1) suivant l'une quelconque des revendications 1 à 4, caractérisé en ce que ladite bande (4) affleure extérieurement les bords desdites lèvres (3a, 3b) et fait intérieurement saillie à partir de la paroi dudit tube (2) en formant un rebord (4a).

6. Produit intermédiaire (6) destiné à l'obtention de tuyaux d'irrigation (1) selon la revendication 1, caractérisé en ce qu'il comprend un bi-corps allongé (7) présentant une symétrie par rapport à un plan longitudinal (P) et formé de deux tubes juxtaposés (7a, 7b) réunis par des rubans superposées (8, 9) qui en sont venus de formage, et une bande (10, 10A) fixée de façon étanche entre les rubans (8, 9), et en ce que ladite bande (10, 10A) est pourvues de cavités d'écoulement (11, 11A), disposées de distance en distance de part et d'autre dudit plan de symétrie (P).

7. Produit intermédiaire (6) selon la revendication 6, caractérisé en ce que lesdits cavités (11) sont prévues dans ladite bande (10) en alternance, de part et d'autre dudit plan de symétrie longitudinal (P).

8. Produit intermédiaire (6) suivant la revendication 6, caractérisé en ce que lesdites cavités (11A) sont prévues dans ladite bande (10A) en coïncidence latéral de part et d'autre dudit plan de symétrie (P).

9. Produit intermédiaire (6) suivant l'une quelconque des revendications 6 à 8 destiné à l'obtention de tuyaux d'irrigation (1) selon l'une quelconque des revendications 2 à 5, caractérisé en ce que la chambre de décharge (14) de chacune desdites cavités (11, 11A) dépasse par rapport audit plan de symétrie longitudinal (P) par un volume (14a) qui peut être divisé.

10. Procédé de fabrication d'un tuyau d'irrigation goutte-à-goutte (1) selon l'une quelconque des revendication 1 à 5, caractérisé en ce qu'il consiste à fabriquer un produit intermédiaire (6) selon l'une quelconque des revendications 6 à 9 et à sectionner ledit produit intermédiaire selon ledit plan de symétrie (P).

11. Procédé de fabrication suivant la revendication 10, caractérisé en ce qu'il consiste à produire en continu une bande en matière plastique (10, 10A), à découper par étampage de part en part dans ladite bande (10, 10A) des cavités d'écoulement (11, 11A), de part et d'autre d'un plan de symétrie longitudinal (P) de la bande (10, 10A), à produire en continu un manchon tubulaire en matière plastique (17), à conduire ladite bande (10, 10A) axialement à l'intérieur dudit manchon (17) pendant sa production, à pincer ledit manchon dans une zone diamétrale pour former lesdits tubes (7a, 7b) et lesdits rubans (8, 9) et à souder ladite bande (10, 10A) entre lesdits rubans (8, 9).

12. Procédé de fabrication suivant la revendication 11, caractérisé en ce que lesdites opérations de pincement et de soudage sont confondus et exécutées pendant que le manchon (17) présente encore sa chaleur de formation.

13. Procédé de fabrication suivant l'une quelconque des revendications 11 et 12, caractérisé en ce que ladite opération de découpage par étampage est exécutée de façon discontinue et en ce qu'il consiste également à accumuler une longueur de ladite bande (10, 10A) avant et ou après ladite opération de découpage, la quantité de bande accumulée étant réglée en fonction de la vitesse d'exécution de ladite opération de découpage par étampage.
